# EUROPÄISCHE PATENTANMELDUNG

(11) **EP 0 552 705 A1**
(43) Veröffentlichungstag der Anmeldung: **28.07.1993**
(21) Anmeldenummer: 93100684.5
(22) Anmeldetag: 18.01.1993
(51) Int. Cl.: A22B 7/00, B65G 47/51, B65G 47/31, B65G 19/02, B65G 43/08

(54) **Verfahren und Vorrichtung zum Betreiben einer Stapelgleisanlage für Schlachtstücke**

(30) Priorität: 20.01.1992 DE 4201365
(71) Anmelder: Banss Maschinenfabrik GmbH & Co. KG, D-35216 Biedenkopf (DE)
(72) Erfinder: Schreiber, Helmut, W-8750 Aschaffenburg (DE)
(74) Vertreter: Klunker . Schmitt-Nilson . Hirsch

(57) **Zusammenfassung**

Verfahren und Vorrichtung zur Beschickung (Einfördern) und Entleerung (Ausfördern) eines in einem Aufbewahrungsbereich, insbesondere einem Kühlraum eines Schlachthofs, angeordneten Stapelgleises (12) mittels einer in seiner Laufrichtung umkehrbaren Fördereinrichtung (Stapelgleisförderer 17), die mit einer für eine Befüllung des Stapelgleises (12) mit Schlachttierkörpern ausreichenden Anzahl von laufrichtungsabhängig wirksamen Mitnehmern (21-30) zur Förderung der Schlachtstücke vom Zubringförderer (10) zum Abzugsförderer (11) versehen ist, wobei bei Einförderung einer Schlachttiermenge, die kleiner als die freie Stapelgleiskapazität ist, nach dem Einfördern auf dem Stapelgleis (12) eine Stapellücke verbleibt und bei Ausförderung einer Teilmenge (50) der auf dem Stapelgleis (12) befindlichen Stapelgleismenge entweder nur eine Förderung der Teilmenge (50) oder eine Förderung der gesamten Stapelgleismenge bis zur Ausförderung der Teilmenge, gegebenenfalls unter Verbleib einer Restmenge (52), auf dem Stapelgleis (12) erfolgt.

## Beschreibung

Die Erfindung betrifft ein Verfahren zum Betreiben einer in einem Aufbewahrungsbereich, insbesondere einem Kühlraum eines Schlachthofs, zur zwischenlagernden Aufnahme von einem Zubringförderer zu einem Abzugsförderer geförderter Schlachtstücke, insbesondere Schlachttierkörper oder Schlachtkörperteile, angeordneten, mehrere Stapelgleise aufweisenden Stapelgleisanlage, wobei jedem Stapelgleis eine in seiner Laufrichtung umkehrbare Fördereinrichtung (Stapelgleisförderer) zugeordnet ist, die mit einer für eine Befüllung des Stapelgleises ausreichenden Anzahl von laufrichtungsabhängig wirksamen Mitnehmern zur Förderung der Schlachtstücke vom Zubringförderer zum Abzugsförderer versehen ist. Darüberhinaus betrifft die Erfindung eine Vorrichtung zur Durchführung des Verfahrens.

Zur zwischenlagernden Aufbewahrung von Schlachtstücken, die in einem Schlachthof für den Versand vorbereitet werden, ist es bekannt, diese in einem Kühlraum auf Stapelgleisen zu lagern, die über einen in den Kühlraum führende Zubringförderer beschickt und über einen aus dem Kühlraum führenden Abzugsförderer, etwa zur Vorbereitung des Versands, entleert werden. Für den Versand der Schlachtstücke ist es notwendig, diese nach bestimmten Kriterien, wie etwa Gewicht, Fettschichtdicke oder dem pH-Wert des Fleisches zu klassifizieren und entsprechend der jeweilig erfolgten Klassifikation einem oder mehreren der Stapelgleise zuzuführen. Wegen der Vielzahl der Klassifikationsmöglichkeiten, der damit verbundenen hohen Anzahl von Stapelgleisen und den begrenzten Kühlraumkapazitäten erweist es sich in der Praxis als wesentlich, die Förderung der Schlachtstücke auf den Stapelgleisen so zu gestalten, daß durch eine optimale Ausnutzung der Stapelgleiskapazitäten eine optimale Ausnutzung der Kühlraumkapazitäten ermöglicht wird.

Aus der EP-B1 0 273 154 ist ein Verfahren zum Zwischenspeichern von Schlachttierkörpern auf Stapelgleisen bekannt. Bei diesem Verfahren soll eine optimale Nutzung der Stapelgleiskapazität dadurch erreicht werden, daß eine nach Ausförderung zu einem Abzugsförderer auf einem Stapelgleis verbliebene Stapelmenge vor der nachfolgenden Einförderung weiterer Schlachtstücke von einem Zubringförderer zum Zubringförderer hin zurückgefördert wird, damit ein lückenloser Stapelanschluß ermöglicht ist. Hierzu ist ein mit Mitnehmern versehener Stapelgleisförderer mit einem laufrichtungsumkehrbaren Antrieb versehen. Die Rückförderbewegung der Stapelmenge zum lückenlosen Stapelanschluß mit vom Zubringförderer herkommenden weiteren Schlachtstücken wird dabei durch einen Endschalter begrenzt oder wird durch eine Zähleinrichtung ermöglicht. Nachteilig an dem bekannten Verfahren ist, daß zur Vermeidung von Stapellücken beziehungsweise zur optimalen Ausnutzung der Stapelgleiskapazität die auf dem Stapelgleis verbliebene Stapelmenge von Schlachtstücken entgegen der Förderrichtung bewegt werden muß. Die Folge hiervon ist ein erhöhter Zeit- und Energieaufwand bei der Zwischenlagerung von Schlachtstücken auf dem Stapelgleis.

Die DE-AS 1 237 008 zeigt eine Vorrichtung zur Beschickung und Entleerung von Stapelgleisen mit einem ebenfalls in seiner Laufrichtung umkehrbaren Stapelgleisförderer, der jedoch mit lediglich in Beschickungsrichtung des Stapelgleises wirksamen Mitnehmern versehen ist. Für eine Mehrzahl von parallel aneordneten Stapelgleisen ist ein Stapelgleisförderer vorgesehen, der parallel zu den einzelnen Stapelgleisen verfahrbar auf Fahrschienen angeordnet ist. Der Stapelgleisförderer ist nur zur Hälfte mit Mitnehmern versehen, so daß sich bei einer vollständigen Befüllung des Stapelgleises alle Mitnehmer im Eingriff mit auf dem Stapelgleis angeordneten Schlachtstücken befinden. Die Schlachtstücke werden dabei von einem Zubringförderer eingefördert und an einen Abzugsförderer ausgefördert.

Diese bekannte Vorrichtung ermöglicht ein Verfahren zur zwischenlagernden Aufnahme von Schlachtstücken auf einem Stapelgleis, bei dem die vom Zubringförderer her eingeförderten Schlachtstücke bis an den Abzugsförderer herangefördert werden. Zur Ausförderung lediglich einer Teilmenge der auf dem Stapelgleis befindlichen Stapelmenge wird die gesamte Stapelmenge weitergefördert bis die Teilmenge ausgefördert ist und eine Restmenge auf dem Stapelgleis verbleibt. Zum Auffüllen des nunmehr lediglich mit der Rest-Stapelmenge belegten Stapelgleises werden die Mitnehmer des Stapelgleisförderers entgegen der Förderrichtung unwirksam bis in eine Ausgangsposition verfahren, um vom Zubringförderer her nachfolgend geförderte Schlachtstücke zu übernehmen und lückenlos an die auf dem Stapelgleis verbliebene Rest-Stapelmenge heranzuführen, so daß wieder eine vollständige, lückenlose Befüllung des Stapelgleises gegeben ist. Zum Ausfördern der auf dem Stapelgleis angeordneten Schlachtstücke oder einer Teilmenge davon werden die Mitnehmer wieder entgegen der Förderrichtung unwirksam verfahren bis der in Förderrichtung gesehen erste Mitnehmer das erste vom Stapelgleis auszufördernde Schlachtstück erreicht. Anschließend erfolgt eine Umschaltung der Laufrichtung des Stapelgleisförderers, so daß mit den in Förderrichtung umlaufenden Mitnehmern ein Ausfördern der Schlachtstücke ermöglicht ist. Die Steuerung der Verfahrbewegungen des Stapelgleisförderers erfolgt dabei durch manuelles Umschalten des Förderantriebs.

Die DE-AS 1 237 008 zeigt demnach ein Verfahren, das es ermöglicht, mit einem Stapelgleisförderer, der laufrichtungsabhängig wirksame Mitnehmer aufweist, ein vollständig aufgefülltes Stapelgleis teilweise, also bis auf eine Rest-Stapelmenge, zu entleeren und ein bis auf eine Rest-Stapelmenge entleertes Stapelgleis vollständig aufzufüllen.

Diese Art des Betriebs eines Stapelgleisförderers erweist sich für eine optimale Ausnutzung der Stapelgleiskapazität als unzureichend. Beim Betrieb von Stapelgleisanlagen kommt es in der Praxis darauf an, den Ein- und Ausfördervorgang möglichst schnell und energiesparend auszuführen, um innerhalb eines möglichst kurzen Zeitraums ein Stapelgleis mit einer möglichst großen Anzahl von Schlachtstücken belegen zu können. Darüber hinaus handelt es sich bei den auf ein Stapelgleis einzufördernden Einfördermengen in der Regel um eine Anzahl von Schlachtstücken, die lediglich eine Teilmenge der von einem Stapelgleis aufnehmbaren Schlachtstückanzahl darstellt. Häufig verhält es sich in der Praxis auch so, daß bereits vor Erreichen der vollständigen Befüllung des Stapelgleises mit Schlachtstücken eine Ausförderung notwendig wird.

Der Erfindung liegt daher die Aufgabe zugrunde, ein Verfahren beziehungsweise eine Vorrichtung vorzuschlagen, das beziehungsweise die einen den praktischen Anforderungen genügenden Betrieb eines Stapelgleisförderers ermöglicht.

Diese Aufgabe wird durch die Merkmale des Anspruchs 1 gelöst.

Das erfindungsgemäße Verfahren nach Anspruch 1 ermöglicht einen Betrieb des Stapelgleisförderers, bei dem im Fall der Einförderung einer lediglich einen Teil der verfügbaren Stapelgleiskapazität beanspruchenden Einfördermenge diese im Fall eines vorher leeren Stapelgleises bis an das vordere Ende des Stapelgleises vorgefördert wird, oder im Fall eines bereits teilweise mit einer Stapelmenge belegten Stapelgleises bis zum lückenlosen Anschluß an diese vorgefördert wird. Der besondere Vorteil dieser Art der Einförderung einer Einfördermenge auf ein Stapelgleis liegt darin, daß bei einem dem Einfördervorgang nachfolgenden Ausfördervorgang die auf dem Stapelgleis befindliche Stapelmenge bereits möglichst dicht am vorderen Ende des Stapelgleises ansteht, so daß entweder unmittelbar nach dem Einfördern bereits wieder ausgefördert werden kann, oder die Mitnehmer des Stapelgleisförderers vor dem eigentlichen Ausfördern nur eine geringstmögliche Strecke entgegen der Beschickungsrichtung des Stapelgleises unwirksam verfahren werden müssen, um für den Ausfördervorgang bereit zu sein.

Bezüglich eines dem ersten Einfördervorgang nachfolgenden weiteren Enfördervorgangs erweist es sich als vorteilhaft, daß auf dem Stapelgleis bereits ein möglichst großer Freiraum zum Einfördern einer weiteren Menge von Schlachtstücken gegeben ist.

Eine weitere Lösung der der Erfindung zugrunde liegenden Aufgabe ist durch den Anspruch 2 gegeben.

Das erfindungsgemäße Verfahren nach Anspruch 2 ermöglicht einen Betrieb des Stapelgleisförderers, bei dem im Fall der Einförderung einer lediglich einen Teil der verfügbaren Stapelgleiskapazität beanspruchenden Einfördermenge diese nur soweit auf das Stapelgleis eingefördert wird, bis das letzte der die Einfördermenge bildenden Schlachtstücke auf dem Stapelgleis angeordnet ist. Hierbei befinden sich die Mitnehmer des Stapelgleisförderers in einer Stellung, die ohne ein Zwischenverfahren der Mitnehmer entgegen der Beschickungsrichtung des Stapelgleises unmittelbar eine Einförderung einer weiteren Einfördermenge auf das Stapelgleis ermöglicht. Aus der nach dem erfindungsgemäßen Einfördervorgang erreichten Stellung des Stapelgleisförderers läßt sich demzufolge eine möglichst schnelle Beschickung des Stapelgleises mit Schlachtstücken erzielen.

Eine weitere Lösung der der Erfindung zugrunde liegenden Aufgabe ist durch den Anspruch 3 gegeben.

Das erfindungsgemäße Verfahren nach Anspruch 3 ermöglicht einen Betrieb des Stapelgleisförderers, bei dem im Fall der Ausförderung einer Teilmenge der auf dem Stapelgleis befindlichen Stapelmenge die Mitnehmer des Stapelgleisförderers nur soweit unwirksam entgegen der Beschickungsrichtung verfahren werden, wie es zum nachfolgenden Ausfördern der Teilmenge notwendig ist.

Hierdurch läßt sich unabhängig von der Anordnung der Stapelmenge auf dem Stapelgleis eine schnellstmögliche Ausförderung einer gewünschten Teilmenge der Stapelmenge erzielen.

Noch eine weitere Lösung der der Erfindung zugrunde liegenden Aufgabe ist durch den Anspruch 4 gegeben.

Das erfindungsgemäße Verfahren nach Anspruch 4 ermöglicht einen Betrieb des Stapelgleisförderers, bei dem im Fall der Ausförderung einer Teilmenge der auf dem Stapelgleis angeordneten Stapelmenge die Mitnehmer des Stapelgleisförderers so weit in Beschickungsrichtung des Stapelgleises verfahren werden, daß eine Ausförderung der gewünschten Teilmenge unter Mitnahme sämtlicher auf dem Stapelgleis angeordneter Schlachtstücke erfolgt. Dabei ist dann nach Beendigung des Ausfördervorgangs die auf dem Stapelgleis verbleibende Rest-Stapelmenge unmittelbar am vorderen Ende des Stapelgleises angeordnet. Hieraus ergibt sich zum einen der Vorteil, daß für einen nachfolgenden weiteren Ausfördervorgang bereits Schlachtstücke am vorderen Ende des Stapelgleises, also in Übergabeposition zum Abzugsförderer hin, angeordnet sind. Zum anderen erweist es sich als vorteilhaft, daß für eine nachfolgende Einförderung weiterer Schlachtstücke auf das Stapelgleis ein möglichst großer Freiraum geschaffen ist, so daß die Schlachtstücke der auf dem Stapelgleis befindlichen Stapelmenge nicht mehr weitergefördert werden müssen.

Eine besonders vorteilhafte Ausgestaltung des erfindungsgemäßen Verfahrens ergibt sich bei einer Kombination eines erfindungsgemäßen Einfördervorgangs mit dem erfindungsgemäßen Ausfördervorgang nach Anspruch 3. Hierbei erfolgt etwa die Ausförderung einer Teilmenge der auf dem Stapelgleis befindlichen Stapelmenge, die entsprechend der vorab beschriebenen Einfördervorgänge entweder am vorderen Ende des Stapelgleises, also zum Abzugsförderer hin, ansteht, oder die unmittelbar am hinteren Ende des Stapelgleises, also zum Zubringförderer hin, ansteht.

Natürlich ist es auch möglich, eine Einfördermenge auf dem Stapelgleis so zu positionieren, daß sie abweichend von den explizit genannten Einfördervorgängen weder unmittelbar am vorderen Ende bzw. unmittelbar anschließend an eine von vorher vorhandene Stapelmenge noch unmittelbar am hinteren Ende des Stapelgleises ansteht. Auch ausgehend von einer derart auf das Stapelgleis eingeförderten Einfördermenge, ist natürlich ein Ausfördervorgang gemäß Anspruch 3 oder Anspruch 4 möglich.

Anspruch 6 zeigt eine Kombination des erfindungsgemäßen Ausfördervorgangs nach Anspruch 4 mit einem der erfindungsgemäßen Einfördervorgänge gemäß den Ansprüchen 1 und 2.

Eine weitere vorteilhafte Variante im Betrieb des Stapelgleisförderers besteht darin, daß zum Einfördern einer Einfördermenge auf ein bereits eine Stapelmenge aufweisendes Stapelgleis die Mitnehmer des Stapelgleisförderers zunächst soweit unwirksam entgegen der Beschickungsrichtung verfahren werden, bis der bei in Beschickungsrichtung umlaufende Stapelgleisförderer vorderste Mitnehmer, nämlich der Anfangs-Mitnehmer, das erste Schlachtstück der auf dem Stapelgleis angeordneten Stapelmenge erreicht. Hierdurch ist es möglich, eine Einfördermenge vom Zubringförderer auf das Stapelgleis einzufördern, wobei gleichzeitig die bereits auf dem Stapelgleis angeordnete Stapelmenge weiter in Richtung Abzugsförderer gefördert wird.

Ausgehend von einem beispielsweise leeren Stapelgleis oder auch einem teilweise belegten Stapelgleis, kann es sich als vorteilhaft erweisen, wenn zur Einförderung einer Einfördermenge auf das Stapelgleis die Mitnehmer des Stapelgleisförderers zunächst so weit unwirksam entgegen der Beschickungsrichtung verfahren werden, bis der Anfangs-Mitnehmer bereit zur Übernahme des ersten Schlachtstücks der auf dem Zubringförderer befindlichen Einfördermenge in Übernahmeposition zum Zubringförderer angelangt ist.

Eine weitere vorteilhafte Variante kann darin bestehen, daß die Mitnehmer des Stapelgleisförderers, ausgehend von einer nach einem vorhergehenden Einfördervorgang erreichten beliebigen Position auf dem Stapelgleis, zum Einfördern einer weiteren Einfördermenge vom Zubringförderer auf das Stapelgleis in Beschickungsrichtung weiterverfahren werden. Dies geschieht unabhängig davon, ob zwischen der bereits auf dem Stapelgleis befindlichen Stapelmenge und der nachgeförderten Einfördermenge eine Stapellücke vorhanden ist oder nicht. Der besondere Vorteil dieser Variante liegt darin, daß möglichst schnell aus einer beliebigen Position der Mitnehmer über dem Stapelgleis heraus auf dieses eingefördert werden kann.

Gemäß einer weiteren Variante im Betrieb des Stapelgleisförderers ist es auch möglich, ausgehend von einem Zustand vom Stapelgleis zum Abzugsförder hin auszufördern, bei dem die insgesamt auf dem Stapelgleis befindliche Stapelmenge durch eine Stapellücke in Teil-Stapelmengen aufgeteilt ist. Ausgehend von dieser Ausgangssituation, bestehen dann für den eigentlichen Ausfördervorgang unterschiedliche Möglichkeiten. So ist es möglich, etwa bei einer auszufördernden Menge, die größer ist als die dem Abzugsförderer benachbarte Teil-Stapelmenge, zunächst die Teil-Stapelmenge und dann einen entsprechenden Teil der der Stapellücke nachgeordneten Teil-Stapelmenge auszufördern. Natürlich kann sich der Ausfördervorgang auch auf einen Anteil der der Stapellücke vorgeordneten Teil-Stapelmenge beschränken, nämlich dann, wenn die Teil-Stapelmenge über eine genügend große Anzahl von Schlachtstücken verfügt.

Eine andere Variante des Ausförderns einer Teilmenge einer auf dem Stapelgleis angeordneten, eine Stapellücke aufweisenden Stapelmenge besteht darin, daß zunächst zum Ausfördern der der Stapellücke vorgeordneten Teil-Stapelmenge die Mitnehmer des Stapelgleisförderers soweit entgegen der Beschickungsrichtung verfahren werden, bis der bei in Beschickungsrichtung umlaufendem Stapelgleisförderer hinterste Mitnehmer, also der End-Mitnehmer, das letzte Schlachtstück der der Stapellücke vorgeordneten Teil-Stapelmenge erreicht und anschließend die Teil-Stapelmenge ausfördert, um dann in einem zweiten Schritt die Mitnehmer wieder entgegen der Beschickungsrichtung zu verfahren, und zwar soweit, bis der End-Mitnehmer das letzte Schlachtstück der auszufördernden Menge erreicht. Die über die Anzahl der auszufördernden Schlachtstücke hinausgehenden Schlachtstücke verbleiben dabei in ihrer Position auf dem Stapelgleis.

Darüber hinaus kann es natürlich auch vorteilhaft sein, wenn gemäß einer weiteren Variante im Betrieb des Stapelgleisförders zunächst vor Ausförderung eines Teils der eine Stapellücke aufweisenden Stapelmenge die Stapellücke geschlossen wird, und daran anschließend, wie bereits erwähnt, die Mitnehmer des Stapelgleisförderers zur Ausförderung der Ausfördermenge soweit entgegen der Beschickungsrichtung verfahren werden, bis der End-Mitnehmer das letzte auszufördernde Schlachtstück erreicht.

Die nachfolgenden Unteransprüche geben weitere vorteilhafte Varianten des erfindungsgemäßen Verfahrens an.

Die erfindungsgemäße Vorrichtung zur Durchführung des Verfahrens weist neben dem Zubring- und Abzugsförderer, dem dazwischenliegend angeordneten Stapelgleis und der in beiden Richtungen umlaufenden, mit Mitnehmern versehenen Fördereinrichtung eine Steuereinrichtung zur Steuerung der Verfahrbewegungen des Stapelgleisförderers auf. Als Ausgangsgrößen zur Steuerung der Verfahrbewegungen dienen der Steuereinrichtung zum einen die bekannte Konfiguration der Stapelgleisbelegung, die durch die Anzahl und die Verteilung der auf dem Stapelgleis befindlichen Schlachtstücke bestimmt ist, und zum anderen die ebenfalls bekannte Positionierung der Mitnehmer des Stapelgleisförderers bezüglich des Stapelgleises. Bei konstanter Teilung des Stapelgleisförderers ist zur Kenntnis der letztgenannten Ausgangsgröße lediglich die Kenntnis eines bestimmten Mitnehmers erforderlich, um davon ausgehend auf die Positionierung der übrigen Mitnehmer zu schließen.

Der Einfördervorgang des Stapelgleisförderers wird von der Steuereinrichtung in Abhängigkeit von einem gegebenen Einfördersignal eingeleitet. Je nach Konfiguration der Stapelgleisbelegung wird dann der Einfördervorgang unmittelbar oder nach Verfahren des Stapelgleisförderers bzw. dessen Mitnehmer in eine Bereitschaftsstellung zur Übernahme von Schlachtstücken vom Zubringförderer eingeleitet. Die Dauer des Einfördervorgangs hängt dabei ab zum einen von der Anzahl der einzufördernden Schlachtstücke, zum anderen von der nach Einförderung gewünschten Stapelgleiskonfiguration.

Analog zum Einfördervorgang wird der Ausfördervorgang in Abhängigkeit von einem Ausfördersignal eingeleitet, wobei wieder je nach Stapelgleiskonfiguration dem Ausfördervorgang ein Verfahren des Stapelgleisförderers vorausgeht oder nicht, damit durch die Steuereinrichtung die Übergabe einer gewünschten Anzahl von Schlachtstücken zum Abzugsförderer bewerkstelligt wird.

Die nachfolgenden Unteransprüche betreffen vorteilhafte Ausführungen der erfindungsgemäßen Vorrichtung, die dadurch erreicht werden, daß die Steuereinrichtung eine Rechnereinheit oder eine Sensoreinrichtung bzw. eine Kombination von Sensoreinrichtung und Rechnereinheit aufweist.

Bei einer möglichen Ausführungsform der Steuereinrichtung können durch die Rechnereinheit die Steuerparameter zur Steuerung des Stapelgleisförderers beziehungsweise zur Ansteuerung eines den Stapelgleisförderer antreibenden Antriebsmotors generiert werden, die etwa als die Antriebsrichtung, die Antriebsdauer sowie etwa auch die Antriebsgeschwindigkeit vorgebende Stellgrößen auf den Antriebsmotor gegeben werden. Die Steuerparameter können dabei aus den gespeicherten, etwa über Inkrementalgeber gemessenen Verfahrstrecken und den ebenfalls gespeicherten Richtungsänderungen des Stapelgleisförderers sowie einer in situ-Geschwindigkeitsmessung, etwa durch einen Tachogenerator, berechnet und umgewandelt in elektrische, oder etwa auch mechanische Stellgrößen auf den Antriebsmotor gegeben werden.

Eine besonders einfache Möglichkeit eine Steuereinrichtung für den Antrieb des Stapelgleisförderers zu schaffen, besteht speziell bei kleineren Kapazitäten der Kühlräume darin, dem Stapelgleis derart Sensoren zuzuordnen, daß die augenblicklichen Positionen der auf dem Stapelgleis angeordneten Schlachtstücke erfaßt und die notwendigen Steueroperationen in Abhängigkeit von der Zuordnung der Schlachtstücke zu den einzelnen Sensoren erfolgt.

Nachfolgend wird die Erfindung anhand der Zeichnungen näher erläutert. Es zeigen:
- Fig. 1: in schematischer Darstellung den Ablauf des erfindungsgemäßen Verfahrens unter Vermeidung von Stapellücken zwischen einer ersten und einer zweiten Einfördermenge;
- Fig. 2: ebenfalls in schematischer Darstellung den Ablauf des erfindungsgemäßen Verfahrens unter Zulassen einer Stapellücke zwischen einer ersten und einer zweiten Einfördermenge;
- Fig. 3: das Ausfördern einer Teilmenge von auf dem Stapelgleis angeordneten Schlachtstücken bei Vorliegen einer Stapellücke;
- Fig. 4: eine Variante des Ausförderns einer Teilmenge von auf dem Stapelgleis angeordneten Schlachtstücken bei Vorliegen einer Stapellücke;
- Fig. 5: ein Flußdiagramm zur Steuerung eines erfindungsgemäßen Einfördervorgangs durch eine Rechnereinheit.

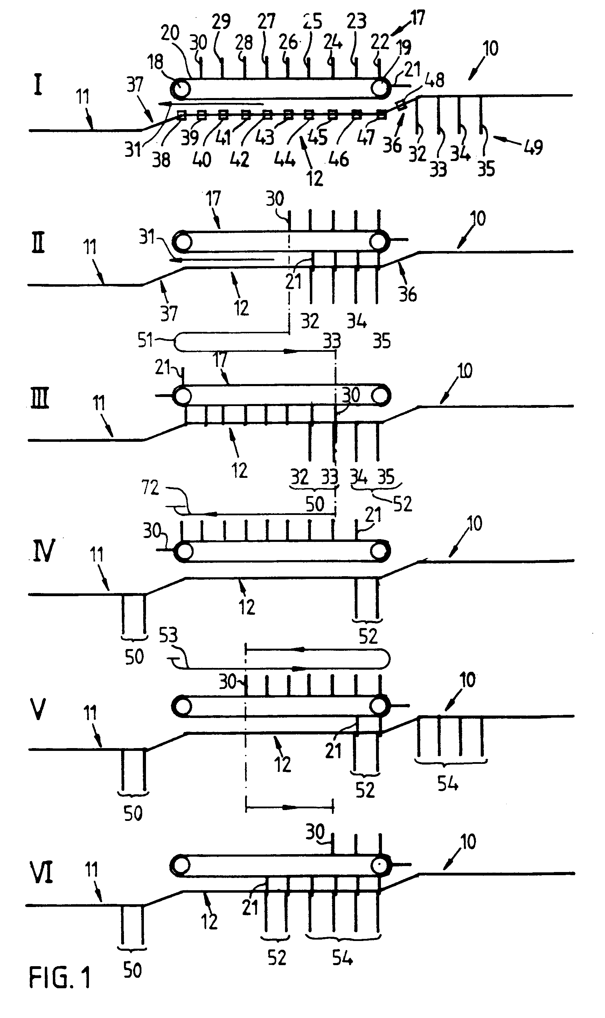

Fig. 1 zeigt ein zwischen einem Zubringförderer 10 und einem Abzugsförderer 11 angeordnetes Stapelgleis 12. Oberhalb des Stapelgleises 12 befindet sich ein Stapelgleisförderer 17, der eine über zwei Umlenkrollen 18, 19 verlaufende Förderkette 20 aufweist, die mit Mitnehmern 21-30 versehen ist. Zum Antrieb des Stapelgleisförderers 17 ist eine der Umlenkrollen 18, 19 als Antriebsrolle ausgebildet und wird von einem hier nicht dargestellten, in der Antriebsrichtung umkehrbaren Antriebsmotor angetrieben, der vorzugsweise auf die Umlenkrolle 18 wirkt.

Die Mitnehmer 21-30 sind so ausgebildet, daß sie nur in der durch den Pfeil 31 gekennzeichneten Umlaufrichtung des Stapelgleisförderers 17, nämlich in der Beschickungsrichtung, wirksam sind. Hierzu sind die Mitnehmer 21-30 mit einem nicht näher dargestellten Scharniergelenk versehen, so daß sie bei einem Anschlag an die nicht näher dargestellte Schlachtstücke aufnehmenden Haken 32-35 entgegen der Beschickungsrichtung 31, etwa unter Überwindung einer Federrückstellkraft, ausweichen und keine Mitnahme ermöglichen. Bei Mitnahme durch die Mitnehmer 21-30 gleiten die Haken 32-35 mit den daran aufgehängten Schlachtstücken auf dem Stapelgleis 12 entlang. Zudem sind in der Realität mehrere Stapelgleise parallel zueinander angeordnet zur Bildung einer Stapelgleisanlage.

Aus Gründen der Übersichtlichkeit sind in Fig. 1 und den folgenden Figuren der Zubringförderer 10 sowie der Abzugsförderer 11 nur durch das jeweils zugehörige Fördergleis dargestellt. Tatsächlich ist zumindest der Zubringförderer 10 mit einer ähnlich dem Stapelgleisförderer 17 ausgebildeten Fördereinrichtung versehen, um die Schlachtstücke zu einem hier durch eine abschüssige Gleitstrecke gebildeten Übernahmebereich 36 hin fördern zu können. Häufig verläuft der Zubringförderer 10 etwa rechtwinklig zu den Stapelgleisen 12, die der Reihe nach mit Weichen vonihm abzweigen; das gleiche kann für den Abzugsförderer 11 gelten.

Im Übernahmebereich 36 werden die Schlachtstücke zur Einförderung auf das Stapelgleis 12 vom Stapelgleisförderer 17 übernommen. Die Ausförderung von Schlachtstücken vom Stapelgleis 12 zum Abzugsförderer 11 erfolgt in einem Übergabebereich 37, in dem die Schlachtstücke an den Abzugförderer 11 übergeben werden. Dieser kann ebenfalls mit einer Fördereinrichtung nach Art des Stapelgleisförderers 17 versehen sein oder etwa auch lediglich aus einem abschüssig angeordneten Fördergleis bestehen.

In Fig. 1 ist eine mögliche Ausführungsvariante zum Betreiben eines Stapelgleisförderers dargestellt, die sich aus einer Kombination erfindungsgemäßer Ein- und Ausfördervorgänge zusammensetzt. Die Phasen I und II zeigen dabei einen ersten erfindungsgemäßen Einfördervorgang, die Phasen III und IV einen erfindungsgemäßen Ausfördervorgang und die Phasen V und VI eine hiermit kombinierte Variante eines Einfördervorgangs. Zur besseren Erläuterung des Verfahrensablaufes sind dem Stapelgleis 12 und dem Stapelgleisförderer 17 Positionsmarken 38-48 zugeordnet, die je nach Ausführung der Steuereinrichtung von einer Rechnereinheit bestimmte Haltepositionen der Mitnehmer 21-30 des Stapelgleisförderers oder Sensoren darstellen. Im weiteren soll die Erläuterung des erfindungsgemäßen Verfahrens anhand von Sensoren erfolgen. Die Sensoren 38-48 bilden dabei einen Bestandteil der in Fig. 1 nicht im einzelnen dargestellten Steuereinrichtung, deren Ausgangssignale zur Ansteuerung des Antriebsmotors des Stapelgleisförderers 17 dienen.

In Phase I befindet sich der Stapelgleisförderer 17 in seinem Ausgangszustand, bereit zur Übernahme des ersten vom Zubringförderer 10 in den Übernahmebereich 36 geförderten Hakens 32. Der Stapelgleisförderer 17 beginnt in dem Moment in Beschickungsrichtung 31 umzulaufen, in dem der Haken 32 in den Registrierbereich des Sensors 48 eintritt. Wenn nach vorgegebener Zeitspanne kein weiterer Haken in den Registrierbereich eintritt, stoppt der Stapelgleisförderer 17. Bei diesem Stop, also nach Einförderung der Haken 32-35, befindet sich der Haken 32 in der Position des Sensors 44.

Dieser Zustand bestimmt Phase II des Verfahrensablaufs, bei dem eine erste durch die Haken 32-35 dargestellte Einfördermenge 49 auf das Stapelgleis 12 eingefördert ist. Hierbei ist die Einfördermenge 49 derart auf dem Stapelgleis 12 angeordnet, daß sich zwischen der Einfördermenge 49 und dem Übernahmebereich 36 keine Stapellücke auftut, so daß etwa weitere nachfolgend vom Zubringförderer 10 geförderte Schlachtstücke unter Weiterförderung der Einfördermenge 49 und an diese anschließend auf das Stapelgleis 12 eingefördert werden können. In Phase II wird die Belegung des Stapelgleises 12 mit den Haken 32-35 durch die entsprechende Zuordnung zu den Sensoren 44-47 erfaßt und als Ausgangssignale an die Steuereinrichtung weitergeleitet.

Zur nachfolgenden Ausförderung einer Teilmenge 50 der auf dem Stapelgleis 12 befindlichen Einfördermenge 49 werden entsprechend der Darstellung von Phase III die Mitnehmer des Stapelgleisförderers 17 so weit entgegen der Beschickungsrichtung 31 zurückgefördert, bis, wie durch den Pfeil 51 gekennzeichnet, der letzte Mitnehmer 30 so weit hinter den Haken 33 gefördert ist, daß bei einer Umkehr der Förderrichtung des Stapelgleisförderers 17 eine Mitnahme der an den Haken 32 und 33 hängenden Teilmenge 50 erfolgen kann. Der Anfang der durch den Pfeil 51 gekennzeichneten Verfahrbewegung des Stapelgleisförderers 17 wird durch ein Startsignal bestimmt. Das Ende der Verfahrbewegung wird durch ein etwa durch das Vorbeifördern des Mitnehmers 30 an der Sensoreinrichtung 45 hervorgerufenes Ausgangssignal derselben bestimmt.

Phase IV zeigt die Verfahrstellung des Stapelgleisförderers 17 nach dem Ausfördern der Teilmenge 50 auf den Abzugsförderer 11. Das Ende einer hierbei ausgeführten, mit dem Pfeil 72 gekennzeichneten Verfahrbewegung wird durch ein durch das Vorbeifördern des Hakens 33 an der Sensoreinrichtung 38 hervorgerufenes Ausgangssignal derselben bestimmt.

Um eine an den Haken 34 und 35 hängende, auf dem Stapelgleis 12 verbliebene Rest-Stapelmenge 52 zusammen mit vom Zubringförderer 10 her geförderten weiteren Schlachtstücken einer Einfördermenge 54 auf dem Stapelgleis 12 fördern zu können, werden die Mitnehmer 21-30 des Stapelgleisförderers 17 so weit entgegen der Beschickungsrichtung 31, wie durch den Pfeil 53 dargestellt, verfahren, bis der Mitnehmer 21 dem Haken 34 zugeordnet ist und nach Umschaltung der Förderbewegung eine Weiterförderung der Rest-Stapelmenge 52 beziehungsweise eine Einförderung der Einfördermenge 54 erfolgen kann. Diese Stellung des Stapelgleisförderers 17 ist in Phase V erreicht. Das Ende der Verfahrbewegung 53 wird dabei durch das Erreichen der Sensoreinrichtung 46 durch den Mitnehmer 21 bestimmt.

Phase VI zeigt schließlich die lückenlos zur Rest-Stapelmenge 52 auf das Stapelgleis 12 eingeförderte Einfördermenge 54.

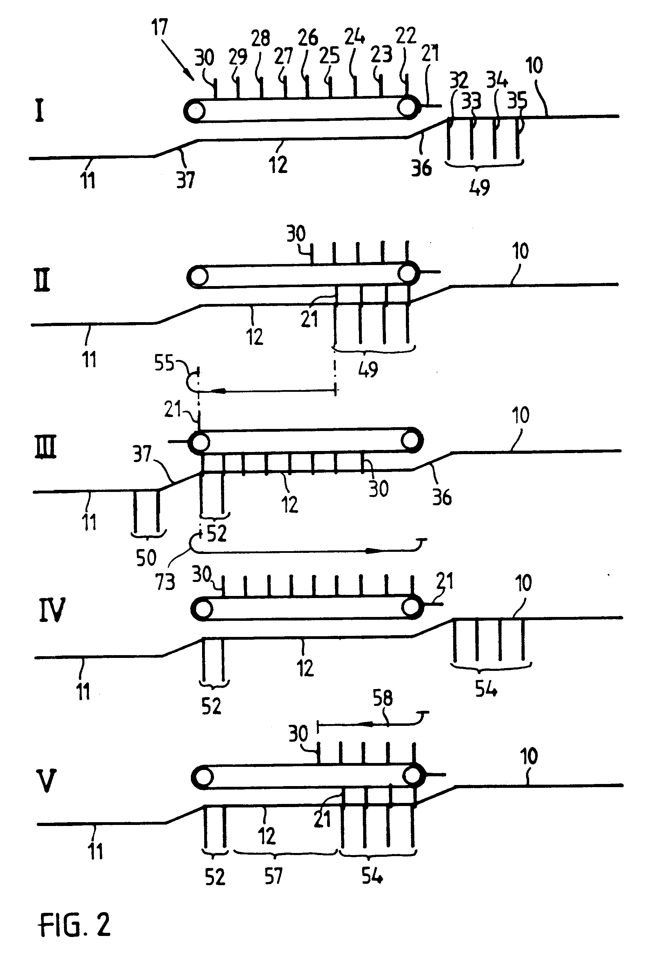

Fig. 2 zeigt als eine weitere mögliche Variante des Stapelgleisfördererbetriebs eine Kombination des bereits in Fig. 1 dargestellten erfindungsgemäßen Einfördervorgangs mit einem von der Darstellung in Fig. 1 abweichenden erfindungsgemäßen Ausfördervorgang und einem weiteren modifizierten Einfördervorgang. Bei der nachfolgnden Erläuterung des Verfahrweges des Stapelgleisförderers 17, der in gleicher Weise wie in Fig. 1 dargestellt über Sensoreinrichtungen gesteuert wird, soll im wesentlichen nur auf die Unterschiede zu dem in Fig. 1 dargestellten Betrieb hingewiesen werden. Die anfänglichen, in den Phasen I und II durchgeführten Verfahrbewegungen ergeben sich, wie ein Vergleich der Figuren 1 und 2 zeigt, in Übereinstimmung zu dem in Fig. 1 dargestellten Betrieb.

Im Unterschied zu der in Fig. 1 dargestellten Möglichkeit, wird bei dem Betrieb gemäß Fig. 2, wie in Phase III dargestellt, zur Ausförderung der Teilmenge 50 die gesamte Einfördermenge 49, wie durch den Pfeil 55 gekennzeichnet, so weit in Beschickungsrichtung 31 verfahren, bis die Teilmenge 50 an den Abzugsförderer 11 übergeben und eine auf dem Stapelgleis 12 verbleibende Rest-Stapelmenge 52 am Übergabebereich 37 zum Abzugsförderer 11 hin ansteht.

Wie in Phase IV dargestellt, werden anschließend die Mitnehmer 21-30 des Stapelgleisförderers 17 in Vorbereitung des weiteren Einförderns der Einfördermenge 54 entgegen der Beschickungsrichtung 31, wie durch den Pfeil 73 gekennzeichnet, so weit verfahren, bis der Mitnehmer 21 zur Übernahme eines ersten Schlachtstücks der Einfördermenge 54 im Übernahmebereich 36 angeordnet ist. Dabei verbleibt die Rest-Stapelmenge 52 in ihrer dem Übergabebereich 37 vorgeordneten Position.

Phase V zeigt den Stapelgleisförderer 17 unmittelbar nach Einförderung der weiteren Einfördermenge 54. Zwischen der Rest-Stapelmenge 52 und der Einfördermenge 54 ist eine Stapellücke 57 entstanden. Bei der Einförderung der Einfördermenge 54 hat der Stapelgleisförderer 17 den durch den Pfeil 58 gekennzeichneten Verfahrweg beschrieben.

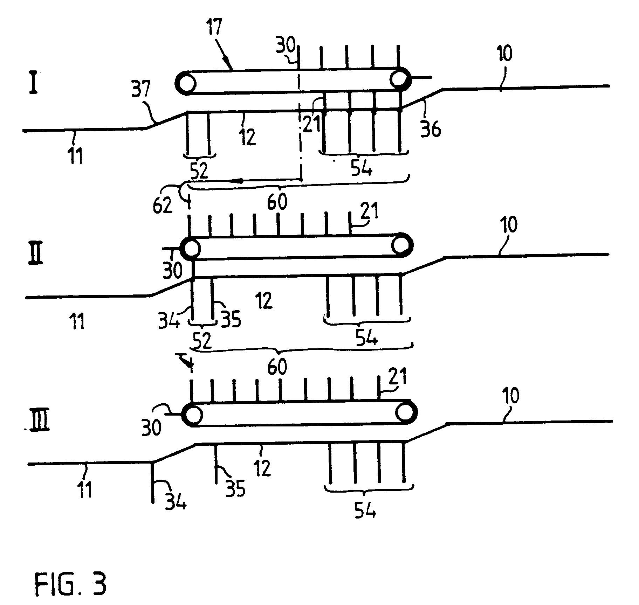

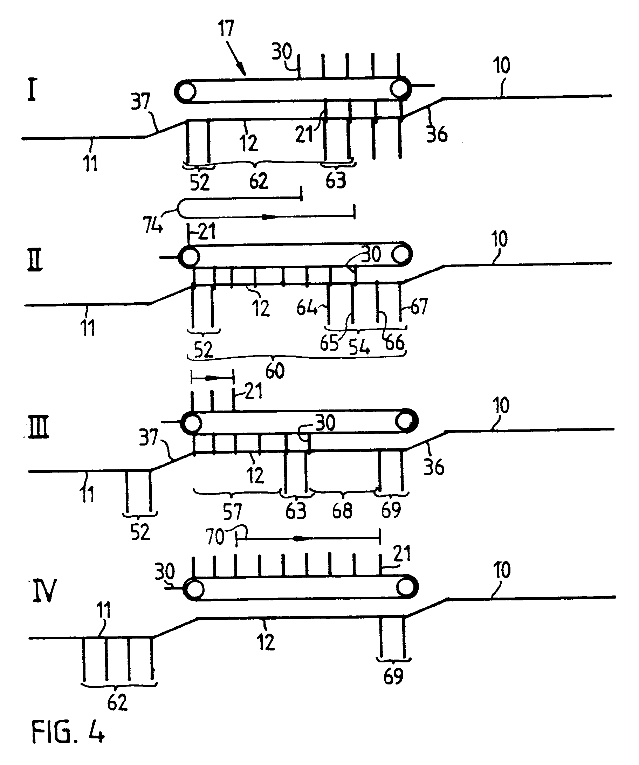

Ausgehend von der in Fig. 2 in Phase V dargestellten Konfiguration mit einer Stapelgleisbelegung aus einer am Übergabebereich 37 anstehenden Rest-Stapelmenge 52 und einer am Übernahmebereich 36 anstehenden Einfördermenge 54 sind in den Figuren 3 und 4 beispielhafte Varianten des Stapelgleisförderer-Betriebs zur Ausförderung einer Teilmenge einer aus der Rest-Stapelmenge 52 und der Einfördermenge 54 bestehenden Stapelgleisbelegung 60 dargestellt.

Fig. 3 zeigt beispielhaft die Ausförderung einer aus dem Haken 34 bestehenden Teilmenge, die kleiner ist als die auf dem Stapelgleis 12 vor dem Übergabebereich 37 angeordnete Teil-Stapelmenge 52.

In Phase I werden die Mitnehmer 21-30, wie durch den Pfeil 62 gekennzeichnet, entgegen der Beschickungsrichtung 31 soweit verfahren, bis der Mitnehmer 30 im Mitnahmebereich des Hakens 34 angeordnet ist. Anschließend erfolgt, wie in Phase II dargestellt, eine Vorbewegung des Mitnehmers 30 in Beschickungsrichtung 31, so daß in Phase III der Haken 34 mit dem daran hängenden Schlachtstück auf den Abzugsförderer 11 ausgefördert ist. Die Einfördermenge 54 bleibt dabei in ihrer Position unverändert am Übergabebereich 36 des Stapelgleises 12 angeordnet.

Fig. 4 zeigt die Möglichkeit, eine Teilmenge 62 auszufördern, die aus der Teil-Stapelmenge 52 und einer Untermenge 63 der Einfördermenge 54 besteht. Die Einfördermenge 54 besteht aus vier nicht näher dargestellten Schlachtstücken, die an Haken 64-67 aufgehängt sind. In der Ausgangskonfiguration weist das Stapelgleis 12 wieder die in Fig. 2 in Phase V beziehungsweise in Fig. 3 in Phase I dargestellte Stapelgleisbelegung 60 auf.

Ausgehend von Phase I erfolgt zunächst eine Rückbewegung der Mitnehmer 21-30, bis der Mitnehmer 30 des Stapelgleisförderers 17 dem Haken 65 der Einfördermenge 54, wie in Phase II dargestellt, zugeordnet ist. Schließlich erfolgt in Phase II eine Vorbewegung des Stapelgleisförderers 17, so daß die Teil-Stapelmenge 52, bestehend aus den an den Haken 34, 35 hängenden Schlachtstücken 15, 16 ausgefördert wird. Gleichzeitig werden die die Untermenge 63 bildenden, an den Haken 64, 65 hängenden Schlachtstücke um eine entsprechende Förderstrecke 68 in Beschickungsrichtung 31 zum Übergabebereich 37 hinbewegt.

Anschließend wird, wie in Phase III dargestellt, die Untermenge 63 von den Mitnehmern 29, 30 des Stapelgleisförderers 17 bis zum Übergabebereich 37 hin gefördert. In Phase IV erfolgt dann die Übergabe der Untermenge 63 an den Abzugsförderer 11, so daß schließlich nur noch die Rest-Stapelmenge 69 als Teilmenge der der Einfördermenge 54 auf dem Stapelgleis 12 verbleibt.

Die bei Durchführung des erfindungsgemäßen Verfahrens ausgeführten Förderbewegungen können kontinuierlich oder entsprechend einer der Stapelgleisfördererteilung vorgesehenen Taktung ausgeführt werden. Bei einer ansonsten taktweise ausgeführten Förderbewegung erweist es sich als besonders vorteilhaft, wenn eine mit dem Pfeil 70 gekennzeichnete Förderbewegung zur Überführung der Haken 64 und 65 von der in Phase II erreichten zu der in Phase III gegebenen Konfiguration kontinuierlich durchgeführt wird, so daß letztendlich zur Ausförderung des Hakens 64 auf den Abzugsförderer 11 nur eine Taktzeit benötigt wird. Hierdurch kann bei einem taktweisen Betrieb des Abzugsförderers 11 dieser während der Schließung der Stapellücke 57 auf dem Stapelgleis 12 weiterbewegt werden. Alternativ kann der Abzugsförderer 11 überhaupt kontinuierlich betrieben werden; in diesem Fall erreicht der Haken 64 den Abzugsförderer so rasch, daß dieser eine lückenlose oder eine nur eine kleine Lücke aufweisende Reihe von Haken fördert.

Alternativ zu den anhand der **Fig. 1** und **2** beschriebenen Betriebsweisen kann man beim Einfördern einer Einfördermenge auf ein Stapelgleis 12 so vorgehen, daß die Einfördermenge so weit wie möglich nach vorn verfahren wird. Bei dieser Betriebsweise würde z.B. in **Fig. 2**, Phase II, die Einfördermenge 49 sich ganz vorn im Stapelgleis 12 befinden oder würde in **Fig. 2**, Phase V, die Einfördermenge 54 unmittelbar an die Reststapelmenge 52 anschließen.

Generell wird darauf hingewiesen, daß die Möglichkeiten bestehen, den Zubringförderer 10, die Stapelgleisförderer 17 und den Abzugsförderer 11 alle taktweise, alle kontinuierlich oder einen Teil dieser Förderer kontinuierlich und den Rest dieser Förderer taktweise zu bewegen. Besonders günstig ist die Variante mit kontinuierlich bewegtem Zubringförderer 10, kontinuierlich bewegtem Abzugsförderer 11 und taktweise bewegten Stapelgleisförderern.

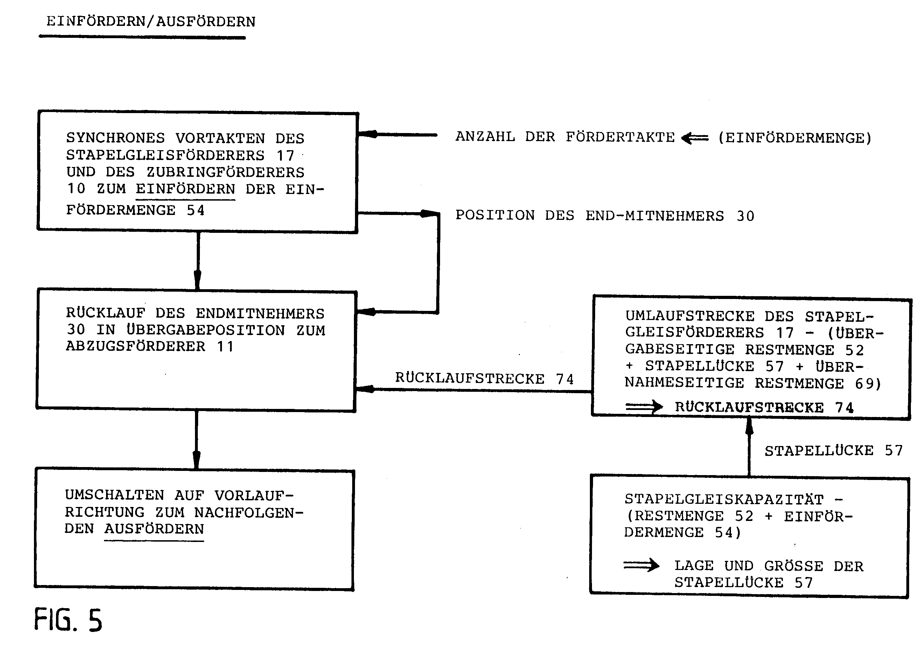

Zur Erläuterung einer möglichen rechnergestützten Steuerung des Stapelgleisfördererbetriebs wird auf Fig. 2, Phasen IV und V, Fig. 4, Phase II und das in Fig. 5 dargestellte Flußdiagramm verwiesen. Ausgehend von der in Fig. 2, Phase IV dargestellten Konfiguration werden die Mitnehmer 21-24 des Stapelgleisförderers 17 zunächst synchron zum Betrieb des Zubringförderers 10 so weit vorgetaktet, bis die Einfördermenge 54 auf das Stapelgleis 12 eingefördert ist. Die Anzahl der dabei ausgeführten Fördertakte richtet sich nach der in einer hier nicht näher dargestellten Rechnereinheit gespeicherten Anzahl der die Einfördermenge 54 bildenden Schlachtstücke. Aus dieser Anzahl ergibt sich auch für die Rechnereinheit die auf dem Stapelgleis eingenommene Position des End-Mitnehmers 30 als bekannt.

Wenn sich der End-Mitnehmer 30 in der der Anzahl der Schlachtstücke der Einfördermenge 54 entsprechenden Position befindet, erfolgt der Rücklauf des End-Mitnehmers 30 entgegen der Beschickungsrichtung 31 so weit, bis der End-Mitnehmer 30 sich in Mitnahmeposition gegenüber dem als letztes von der Einfördermenge 54 auszufördernden Schlachtstück befindet, das am Haken 65 hängt. Wie in dem Flußdiagramm in Fig. 5 dargestellt, ergibt sich die vom End-Mitnehmer 30 zurückzulegende Rücklaufstrecke aus einer von der Rechnereinheit durchzuführenden Rechenoperation. Hierzu wird von der bekannten Umlaufstrecke für einen Gesamtumlauf des Stapelgleisförderers 17 eine der übergabeseitigen Teil-Stapelmenge 52 (= 2 Teilungen), der Stapellücke 57 (= 4 Teilungen) und der übernahmeseitigen Restmenge 69 (= 2 Teilungen des Stapelgleisförderers 17) entsprechende Laufstrecke (= 8 Teilungen) subtrahiert, so daß die in Fig. 4 in Phase II dargestellte Positionierung des Stapelgleisförderers 17 erreicht wird. Die Größe der Stapellücke 57 ergibt sich dabei aus der bekannten Stapelgleiskapazität reduziert um die Teil-Stapelmenge 52 sowie die auf das Stapelgleis 12 eingeförderte Einfördermenge 54. Nachdem der Stapelgleisförderer 17 beziehungsweise dessen Mitnehmer die vorstehend erläuterte Positionierung über dem Stapelgleis 12 erreicht haben, erfolgt die Umschaltung des Stapelgleisförderer-Antriebs zur nachfolgenden Ausförderung der Teilmenge 62 vom Stapelgleis 12 in der in Fig. 4 dargestellten und bereits oben näher erläuterten Art und Weise.

Um auf den Zubringförderer 10 bewegte Schlachtstücke entsprechend ihren Klassifikationsmerkmalen auf die Stapelgleise 12 zu verteilen und um - etwa entsprechend einer Bestellung - Schlachtstücke in gewünschten Anzahlen aus einzelnen Stapelgleisen 12 abzuziehen und gemeinsam auf dem Abzugsförderer wegzubewegen, kann eine Zielsteuerung vorgesehen sein, welche die Stapelgleisweichen steuert und auf die Bewegungen der Stapelgleisförderer Einfluß nimmt. Dies ist an sich aus der EP-B1-0 273 154 bekannt.

## Patentansprüche

1. Verfahren zum Betreiben einer in einem Aufbewahrungsbereich, insbesondere einem Kühlraum eines Schlachthofs, zur zwischenlagernden Aufnahme von einem Zubringförderer (10) zu einem Abzugsförderer (11) geförderter Schlachtstücke, insbesondere Schlachttierkörper oder Schlachttierkörperteile, angeordneten, mehrere Stapelgleise (12) aufweisenden Stapelgleisanlage, wobei jedem Stapelgleis (12) eine in ihrer Laufrichtung umkehrbare Fördereinrichtung (Stapelgleisförderer 17) zugeordnet ist, die mit einer für eine Befüllung des Stapelgleises (12) ausreichenden Anzahl von laufrichtungsabhängig wirksamen Mitnehmern (21-30) zur Förderung der Schlachtstücke vom Zubringförderer (10) zum Abzugsförderer (11) versehen ist,
bei dem zum Einfördern einer vom Zubringförderer (10) herkommenden Einfördermenge (49), die kleiner ist als die verfügbare Stapelgleiskapazität, die Förderung der Einfördermenge (49) auf einem Stapelgleis (12) unter Verbleib einer Stapellücke zum hinteren Ende des Stapelgleises (12) bis zum vorderen Ende des Stapelgleises (12) oder bis zum Anschluß an eine auf dem Stapelgleis befindliche Stapelmenge erfolgt.

2. Verfahren zum Betreiben einer in einem Aufbewahrungsbereich, insbesondere einem Kühlraum eines Schlachthofs, zur zwischenlagernden Aufnahme von einem Zubringförderer (10) zu einem Abzugsförderer (11) geförderter Schlachtstücke, insbesondere Schlachttierkörper oder Schlachttierkörperteile, angeordneten, mehrere Stapelgleise (12) aufweisenden Stapelgleisanlage, wobei jedem Stapelgleis (12) eine in ihrer Laufrichtung umkehrbare Fördereinrichtung (Stapelgleisförderer 17) zugeordnet ist, die mit einer für eine Befüllung des Stapelgleises (12) ausreichenden Anzahl von laufrichtungsabhängig wirksamen Mitnehmern (21-30) zur Förderung der Schlachtstücke vom Zubringförderer (10) zum Abzugsförderer (11) versehen ist,
bei dem zum Einfördern einer vom Zubringförderer (10) herkommenden Einfördermenge (49), die kleiner ist als die verfügbare Stapelgleiskapazität, die Förderung der Einfördermenge (49) auf einem Stapelgleis (12) unter Verbleib einer Stapellücke zu dem vorderen Ende des Stapelgleises (12) oder einer auf dem Stapelgleis (12) befindlichen Stapelmenge bis zum Abschluß der Einfördermenge (49) mit dem hinteren Ende des Stapelgleises (12) erfolgt.

3. Verfahren zum Betreiben einer in einem Aufbewahrungsbereich, insbesondere einem Kühlraum eines Schlachthofs, zur zwischenlagernden Aufnahme von einem Zubringförderer (10) zu einem Abzugsförderer (11) geförderter Schlachtstücke, insbesondere Schlachttierkörper oder Schlachttierkörperteile, angeordneten, mehrere Stapelgleise (12) aufweisenden Stapelgleisanlage, wobei jedem Stapelgleis (12) eine in ihrer Laufrichtung umkehrbare Fördereinrichtung (Stapelgleisförderer 17) zugeordnet ist, die mit einer für eine Befüllung des Stapelgleises (12) ausreichenden Anzahl von laufrichtungsabhängig wirksamen Mitnehmern (21-30) zur Förderung der Schlachtstücke vom Zubringförderer (10) zum Abzugsförderer (11) versehen ist,
bei dem zum Ausfördern einer Teilmenge (50) der Stapelmenge (49) auf einem Stapelgleis (12) die Mitnehmer (21-30) zunächst soweit unwirksam entgegen der Beschickungsrichtung (31) verfahren werden, bis der letzte Mitnehmer (End-Mitnehmer 30) das letzte der die Teilmenge (50) bildenden Schlachtstücke erreicht und anschließend unter Mitnahme der Teilmenge (50) in Beschickungsrichtung (31) verfahren werden, bis die Teilmenge (50) ausgefördert ist.

4. Verfahren zum Betreiben einer in einem Aufbewahrungsbereich, insbesondere einem Kühlraum eines Schlachthofs, zur zwischenlagernden Aufnahme von einem Zubringförderer (10) zu einem Abzugsförderer (11) geförderter Schlachtstücke, insbesondere Schlachttierkörper oder Schlachttierkörperteile, angeordneten, mehrere Stapelgleise (12) aufweisenden Stapelgleisanlage, wobei jedem Stapelgleis (12) eine in ihrer Laufrichtung umkehrbare Fördereinrichtung (Stapelgleisförderer 17) zugeordnet ist, die mit einer für eine Befüllung des Stapelgleises (12) ausreichenden Anzahl von laufrichtungsabhängig wirksamen Mitnehmern (21-30) zur Förderung der Schlachtstücke vom Zubringförderer (10) zum Abzugsförderer (11) versehen ist,
bei dem zum Ausfördern einer Teilmenge (50) der Stapelmenge (49) auf einem Stapelgleis, die kleiner ist als die verfügbare Stapelgleiskapazität, die Mitnehmer (21-30) unter Mitnahme aller auf dem Stapelgleis (12) befindlichen Schlachtstücke so weit verfahren werden, bis unter Verbleib einer Rest-Stapelmenge (52) auf dem Stapelgleis (12) die Teilmenge (50) ausgefördert ist.

5. Verfahren nach Anspruch 1 oder 2,
bei dem zum Ausfördern einer Teilmenge (50) der Stapelmenge (49) auf einem Stapelgleis (12) die Mitnehmer (21-30) zunächst soweit unwirksam entgegen der Beschickungsrichtung (31) verfahren werden, bis der letzte Mitnehmer (End-Mitnehmer 30) das letzte der die Teilmenge (50) bildenden Schlachtstücke erreicht und anschließend unter Mitnahme der Teilmenge (50) in Beschickungsrichtung (31) verfahren werden, bis die Teilmenge (50) ausgefördert ist.

6. Verfahren nach Anspruch 1 oder 2,
bei dem zum Ausfördern einer Teilmenge (50) der Stapelmenge (49) auf einem Stapelgleis, die kleiner ist als die verfügbare Stapelgleiskapazität, die Mitnehmer (21-30) unter Mitnahme aller auf dem Stapelgleis (12) befindlichen Schlachtstücke so weit verfahren werden, bis unter Verbleib einer Rest-Stapelmenge (52) auf dem Stapelgleis (12) die Teilmenge (50) ausgefördert ist.

7. Verfahren nach einem oder mehreren der vorangehenden Ansprüche,
bei dem zum Einfördern einer Einfördermenge (54) zunächst die Mitnehmer (21-30) unwirksam entgegen der Beschickungsrichtung (31) verfahren werden, bis der bei Lauf des Stapelgleisförderers (17) in Beschickungsrichtung (31) erste Mitnehmer (Anfangs-Mitnehmer 21) das erste Schlachtstück einer auf dem Stapelgleis (12) befindlichen Stapelmenge (52) erreicht.

8. Verfahren nach einem oder mehreren der Ansprüche 1 bis 6,
bei dem zum Einfördern einer Einfördermenge (54) zunächst die Mitnehmer (21-30) unwirksam entgegen der Beschickungsrichtung (31) verfahren werden, bis der bei Lauf des Stapelgleisförderers (17) in Beschickungsrichtung (31) erste Mitnehmer (Anfangs-Mitnehmer 21) in einer Übernehmeposition zum Zubringförderer (10) angelangt ist.

9. Verfahren nach einem oder mehreren der Ansprüche 1 bis 6,
bei dem zum Einfördern einer Einfördermenge (54) die Mitnehmer (21-30) aus der nach einem vorherigen Einfördervorgang erreichten Stellung in Beschickungsrichtung (31) verfahren werden.

10. Verfahren nach einem oder mehreren der vorangehenden Ansprüche,
bei dem das Einfördern so erfolgt, daß zwischen einer von vorher auf dem Stapelgleis (12) befindlichen Stapelmenge (52) und der Einfördermenge (54) eine Stapellücke (57) verbleibt, und bei dem, ausgehend von dem Zustand mit Stapellücke (57), ausgefördert wird.

11. Verfahren nach Anspruch 10,
bei dem zum Ausfördern in einem ersten Schritt die Mitnehmer (21-30) so weit entgegen der Beschickungsrichtung (31) verfahren werden, bis der bei Lauf des Stapelgleisförderers (17) in Beschickungsrichtung (31) letzte Mitnehmer (End-Mitnehmer 30) das letzte Schlachtstück der vor der Stapellücke (57) befindlichen Teil-Stapelmenge (52) erreicht und anschließend diese Teil-Stapelmenge (52) ausgefördert wird, und
bei dem in einem zweiten Schritt die Mitnehmer (21-30) so weit entgegen der Beschickungsrichtung (31) verfahren werden, bis der End-Mitnehmer (30) das letzte Schlachtstück der Ausfördermenge erreicht.

12. Verfahren nach Anspruch 10, bei dem zum Ausfördern in einem ersten Schritt die Einfördermenge (54) zur Schließung der Stapellücke (57) an die Teil-Stapelmenge (52) herangefördert wird, und
bei dem in einem zweiten Schritt die Mitnehmer (21-30) soweit entgegen der Beschickungsrichtung (31) verfahren werden, bis der End-Mitnehmer (30) das letzte Schlachtstück der Ausfördermenge erreicht.

13. Verfahren nach einem oder mehreren der vorangehenden Ansprüche,
bei dem bei einer Ausfördermenge (Teilmenge 62), die größer ist als die Teil-Stapelmenge (52), die Mitnehmer (21-30) während der Ausförderung der Rest-Stapelmenge (52) und der Einfördermenge (54) synchron und beim Durchlaufen der Stapellücke (57) asynchron zum Abzugsförderer (11) bewegt werden.

14. Verfahren nach Anspruch 13,
bei dem die Mitnehmer (21-30) beim Durchlaufen der Stapellücke (57) eine gegenüber der Ausförderung der Rest-Stapelmenge (52) und der Einfördermenge (54) beschleunigte Bewegung ausführen.

15. Verfahren nach einem oder mehreren der vorangehenden Ansprüche,
bei dem bei getakteter Förderbewegung des Stapelgleisförderers (17) nach Ausförderung des letzten Schlachtstücks der Teil-Stapelmenge (52) die Einfördermenge (54) innerhalb einer Taktzeit zur Schließung der Stapellücke zum vorderen Ende des Stapelgleises (12) vorbewegt wird.

16. Verfahren nach einem oder mehreren der vorangehenden Ansprüche, bei dem bei getakteter Förderbewegung des Stapelgleisförderers (12) nach Ausförderung des letzten Schlachtstücks der Teil-Stapelmenge (52) der Abzugsförderer (11) während der Förderung der Einfördermenge (54) bis zum Erreichen des vorderen Endes des Stapelgleises (12) zur Schließung der Stapellücke (57) stillsteht.

17. Verfahren nach einem oder mehreren der vorangehenden Ansprüche,
bei dem zur Steuerung des Stapelgleisförderers (17) eine Rechnereinheit verwendet wird.

18. Verfahren nach Anspruch 17,
bei dem als Ausgangsgrößen zur Berechnung von Steuerparametern durch die Rechnereinheit die Anzahl der die Einfördermenge (49, 54) bildenden Schlachtstücke und die gespeicherte Anzahl der mit dem Stapelgleisförderer (17), vorzugsweise als Fordertakte ausgeführten Bewegungen verwendet werden.

19. Verfahren nach Anspruch 16,
bei dem die durch die Rechnereinheit berechneten Steuerparameter als Stellgrößen auf zumindest einen Stellmotor gegeben werden.

20. Verfahren nach einem oder mehreren der vorangehenden Ansprüche,
bei dem zur Steuerung des Stapelgleisförderers (17) Sensoren (38-48) verwendet werden.

21. Vorrichtung zur Durchführung des Verfahrens nach einem oder mehreren der Ansprüche 1 bis 20,
mit einem zwischen einem Zubringförderer (10) und einem Abzugsförderer (11) angeordneten Stapelgleis (12), einer in der Laufrichtung umkehrbaren Fördereinrichtung (Stapelgleisförderer 17), die mit einer für eine Befüllung des Stapelgleises (12) ausreichenden Anzahl von laufrichtungsabhängig wirksamen Mitnehmern (21-30) versehen ist, und
einer Steuereinrichtung zur Steuerung der Verfahrbewegungen des Stapelgleisförderers,
bei der als Basisgrößen zur Steuerung der Verfahrbewegungen des Stapelgleisförderers (17) die Stapelgleisbelegung (60) hinsichtlich Anzahl und Verteilung von auf dem Stapelgleis (12) befindlichen Schlachtstücken und die Positionierung der Mitnehmer (21-30) des Stapelgleisförderers (17) bezüglich des Stapelgleises (12) dienen,
die zum Einfördern in Abhängkeit von einem Einfördersignal, soweit erforderlich, ein Verfahren des Stapelgleisförderers (17) in Bereitschaftsstellung zur Übernahme von Schlachtstücken vom Zubringförderer (10) auf das Stapelgleis (12) und ein Einfördern der Schlachtstücke auf das Stapelgleis bewirkt, und
die zum Ausfördern in Abhängigkeit von einem Ausfördersignal, soweit erforderlich, ein Verfahren des Stapelgleisförderers (17) in Bereitschaftsstellung zur Übergabe einer bestimmten Anzahl von Schlachtstücken und ein Ausfördern der Schlachtstücke aus dem Stapelgleis bewirkt.

22. Vorrichtung nach Anspruch 21,
bei der die Steuereinrichtung eine Rechnereinheit aufweist.

23. Vorrichtung nach Anspruch 21 oder 22,
bei der die Steuereinrichtung die Relativposition von Schlachtstücken und Mitnehmern (21-30) des Stapelgleisförderers (17) zum Stapelgleis (12) erkennende Sensoren (38-48) aufweist.
